# EUROPÄISCHE PATENTSCHRIFT

(11) **EP 0 825 066 B1**
(45) Veröffentlichungstag und Bekanntmachung des Hinweises auf die Patenterteilung: **21.03.2001**
(21) Anmeldenummer: 97110333.8
(22) Anmeldetag: 25.06.1997
(51) Int. Cl.: B60R 13/02

(54) **Verfahren zur Herstellung einer Dachversteifung Für Fahrzeuge und Dachversteifung**
Roof stiffener for vehicles and method of manufacturing the same
Procédé de fabrication d'un renfort de toit pour véhicules et renfort fabriqué par ce procédé

(30) Priorität: 09.08.1996 DE 19632055
(43) Veröffentlichungstag der Anmeldung: 25.02.1998
(73) Patentinhaber: Johnson Controls Headliner GmbH, 42285 Wuppertal (DE)
(72) Erfinder: Eickhoff, Thomas, 66740 Saarlouis (DE); Ewen, Manfred, 66265 Heusweiler (DE)
(74) Vertreter: Patentanwälte Thömen & Körner

(56) Entgegenhaltungen:
- WO-A-96/13377
- US-A- 3 867 240
- US-A- 4 729 917
- US-A- 4 957 797
- US-A- 5 258 585

## Beschreibung

Die Erfindung betrifft ein Verfahren zur Herstellung einer Dachversteifung für Fahrzeuge und eine nach dem Verfahrenhergestellte Dachversteifung.

Üblicherweise wird die Dachfestigkeit, auf die es z.B. bei einem Fahrzeugüberschlag ankommt, durch den Dachrahmen, der direkt an die Säulen (A-, B-, C- bzw. D-Säule) gebunden ist, erbracht. Die Dachaußenhaut schließt lediglich die Fläche. Damit diese Dachaußenhaut bei Belastung z.B. durch Schneelast, Waschstraße oder Handdruck bei der Reinigung nicht nachgibt, werden von der Automobilindustrie verschiedene Versteifungsmethoden eingesetzt. Zusätzlich muß die Dachhaut im Fahrzeuginneren akustisch bedämpft werden, um z.B. den Trommeleffekt bei Regen zu vermindern.

Es ist bekannt, eine Dachversteifung durch Metallspriegel und Dämpfung durch zwischen die Spriegel verklebte Fasermatten zu erreichen. Eine weitere Möglichkeit besteht darin, einen verstärkten Formhimmel direkt an der Außenhaut zu verkleben.

Daneben ist es möglich, Tafelwellpappe, die verformt oder unverformt ist, direkt an die Dachaußenhaut zu verkleben.

Die Tafelwellpappe leidet unter hoher Feuchtigkeitsaufnahme mit der Folge starker Verformung, Geruchsbildung bei Feuchtigkeitsaufnahme, einem Memoryeffekt, der das Formteil wieder in die plane Form zu bringen versucht, durch unakzeptabel hohe Emissionswerte, durch einen ungenügenden Verformungsgrad, starke Einschränkung in der Dicke des Bauteils, hohe Steifigkeit nur in einer Richtung und ungenügende Dämpfungseigenschaft.

Aufbauend auf der Dachversteifung mit Tafelwellpappe liegt der Erfindung die Aufgabe zugrunde, eine Dachversteifung zu schaffen, welche eine starke Aussteifungswirkung besitzt, gegen Feuchtigkeit resistent ist, eine Memoryeffekt vermeidet und außerdem hohe Dämpfungseigenschaften aufweist.

Diese Aufgabe wird bei einem Verfahren nach dem Oberbegriff des Anspruchs 1 durch die im Kennzeichen angegebenen Merkmale gelöst und bei einer Dachversteifung nach dem Oberbegriff des Anspruchs 4 durch die im Kennzeichen des Anspruchs 4 angegebenen Merkmale gelöst.

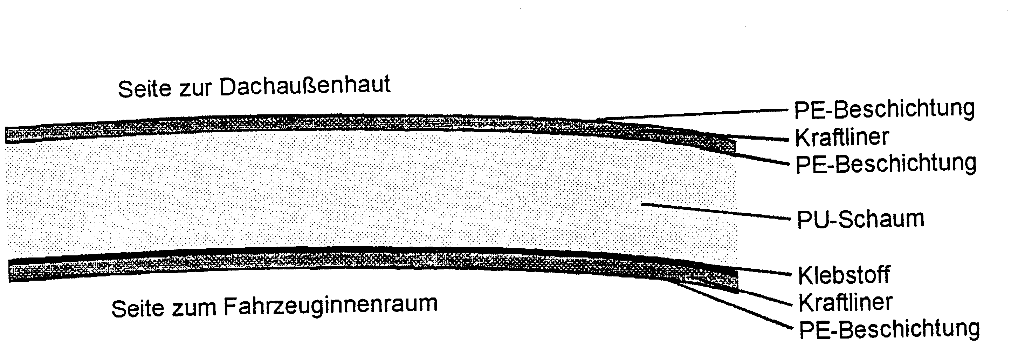

Weiterbildungen und vorteilhafte Ausgestaltungen ergeben sich aus den Unteransprüchen. Nachfolgend wird die Erfindung anhand der Zeichnung näher erläutert.

Die Herstellung des Halbzeugs als Vorprodukt hat zunächst den Vorteil, daß hier mit üblichen Produktionsmaschinen gearbeitet werden kann, so daß eine gleichmäßige Qualität der Hartschaumschicht gewährleistet ist. Bei der anschließenden mittigen Spaltung des Halbzeugs entstehen zwei gleichartig aufgebaute Flächengebilde, so daß im Vergleich zur Fläche des Halbzeugs eine Verdoppelung der Flächenausbeute des zur Dachversteifung dienenden Materials erzielt wird. Im Gegensatz zum Halbzeug ist dieses Zwischenprodukt biegsam, da ja eine der zur Versteifung dienenden äußeren Schichten fehlt. Die Biegsamkeit ist auch dann noch gegeben, wenn der ergänzende Kraftliner zusammen mit einer noch offenen, d. h. noch weichen, nicht abgebundenen Klebeschicht auf der Seite der Hartschaumschicht mit dem gespaltenen Halbzeug in Kontakt gebracht wird, so daß dieses Flächengebilde nun mit einem Formwerkzeug auf die gewünschte Form umgeformt werden kann. Wenn dann die Klebeschicht abbindet, nimmt das fertige Produkt wieder die formstabilen Eigenschaften eines Sandwich-Materials an und daher bleibt die durch die Umformung gewonnene Form auch dann erhalten, wenn das Endprodukt im Fahrzeug eingebaut ist und thermischen Belastungen durch Sonneneinstrahlung des Fahrzeugdaches ausgesetzt wird.

Die zur Herstellung des mehrschichtigen Halbzeugs verwendeten Kraftliner sind vorzugsweise beidseitig mit thermoplastischem Kunststoff beschichtet, während der einzelne Kraftliner nur einseitig auf der nicht zur Verklebung vorgesehenen Seite mit thermoplastischem Kunststoff beschichtet ist.

Die Kunststoffbeschichtung verhindert, daß Feuchtigkeit von außen in die Hartschaumschicht eindringen kann. Bei der Herstellung des Halbzeugs dient die Kunststoffschicht außerdem zur thermischen Verbindung der Hartschaumschicht mit den Kraftlinern. Beim Verkleben des einzelnen Kraftliners mit der gespaltenen Hartschaumschicht können Kleber verwendet werden, die auch teilweise in das Kraftlinermaterial eindringen und so die Klebebindekräfte erhöhen. Hier würde die Kunststoffschicht das Eindringen des Klebers verhindern und so die Festigkeit der Verbindung beeinträchtigen. Durch Weglassen der Kunststoffschicht auf der zur Verklebung vorgesehenen Seite des Kraftliners ergibt sich eine bessere Verbindung zur Hartschaumschicht, was auch der Steifigkeit des Endproduktes zugute kommt.

Weiterhin wird der im Formwerkzeug zu einem Formteil umgeformte und zusammengefügte Zuschnitt des gespaltenen Halbzeugs und der Zuschnitt des einzelnen Kraftliners vor Verlassen des Formwerkzeugs auf die endgültige Form der Dachversteifung geschnitten.

Hierdurch wird gewährleistet, daß eventuell bei der Umformung auftretende Änderungen der Abmessungen nicht die Maßhaltigkeit des Endproduktes beeinträchtigen. Die Abmessungen des Endproduktes werden also erst nach dessen endgültiger Umformung hergestellt.

Die Kraftliner bestehen vorzugsweise aus wasserfest verleimtem Zellstoffpapier mit einem Flächengewicht von 100 bis 200 g/m².

Dieses Material besitzt eine ausreichende Festigkeit, um als Teil des Sandwich-Aufbaus dem mehrschichtigen Material eine ausreichende Steifigkeit zu geben. Außerdem ist das Material weitgehend wasserunempfindlich und erfüllt die Anforderungen an die maximal zulässige Schadstoffemission im Fahrzeuginnenraum.

Die Hartschaumschicht besteht bei einer praktischen Ausgestaltung aus geschlossenzelligem Polyurethanhartschaum mit einem Raumgewicht von 40 bis 55 kg/m³.

Mit diesem Material wird die gewünschte Schalldämmung und Wärmeisolierung erreicht.

Die Kunststoffbeschichtung kann aus HDPE, PP oder PET bestehen und ein Flächengewicht von 10 bis 25 g/m² besitzen.

Hierdurch wird eine ausreichende Sperre gegen Feuchtigkeit erreicht.

Die Klebstoffschicht kann aus einem 1K- oder 2K-Polyurethansystem oder aus reinem Isozyanat bestehen und ein Flächengewicht von 60 bis 120 g/m² besitzen.

Dieses Material entwickelt gegenüber den beiden zu verklebenden Schichten eine ausreichende Bindung, besitzt eine kurze Abbindezeit, ist ausreichend temperaturbeständig und erfüllt die Anforderungen an geringe Schadstoffemission im Innenraum des Fahrzeugs.

Die Zeichnung zeigt einen Querschnitt durch eine Dachversteifung nach der Erfindung.

Bei dessen Herstellung wird wie folgt vorgegangen. Zunächst wird ein Halbzeug mit doppelter Dicke der späteren Dachversteifung hergestellt. Dies geschieht dadurch, daß zwischen zwei Kraftliner nach dem Bandschaumverfahren Polyurethanhartschaum bandgeschäumt wird. Der Polyurethanhartschaum hat geschlossenzellige Eigenschaften und besitzt ein Raumgewicht zwischen 40 und 55 kg/m². Die beiden Kraftliner bestehen aus Zellpapier, das wasserfest verleimt ist und ein Flächengewicht von 100 bis 200 g/m² aufweist. Die Kraftliner sind beidseitig mit thermoplastischem Kunststoff beschichtet, wobei die Beschichtung ein Flächengewicht von 10 bis 25 g/m² aufweist. Die thermoplastische Kunststoffbeschichtung dient als Wasser- und Wasserdampfsperre. Als Kunststoffmaterialien kommen HDPE, PP oder PET in Betracht.

Nach Herstellung des planen Halbzeugs wird die Platte mittig gespalten. Die Platte ist dann wieder flexibel. Die Platten können nun mit Übermaß auf die Abmessungen des Fahrzeugdaches zugeschnitten werden.

Ferner werden einzelne Kraftliner, die nur an einer Seite mit thermoplastischem Kunststoff beschichtet sind, ebenfalls mit Übermaß auf das Dach zugeschnitten und einseitig auf ihrer unbeschichteten Seite mit Klebstoff versehen. Als Klebstoff werden ein 1K- oder 2K-Polyurethansystem oder reines Isozyanat verwendet. Die Auftragsmenge beträgt je nach Festigkeitsanspruch und Kraftlinerqualität 60 bis 100 g/m² Anschließend werden der Zuschnitt des gespaltenen Halbzeugs und der Zuschnitt des einzelnen Kraftliners in ein Formwerkzeug gebracht, das der Wölbung und Kontur der Dachhaut entspricht. Die beiden Teile werden dabei so aufeinander ausgerichtet, daß die mit der Klebeschicht versehene Seite des einzelnen Kraftliners auf die aufgeschnittene Seite, also die Hartschaumseite des gespaltenen Halbzeugs zu liegen kommt. Die beiden Teile werden nun in die endgültige Form umgeformt und gleichzeitig verklebt. Bei dem Umformvorgang ist der Kleber noch offen, so daß die mit der Klebeschicht benetzten Flächen gegenseitig aneinandergleiten können. Die Preßzeit richtet sich nach dem Klebstoffsystem und der Auftragsmenge Klebstoff. Kurz bevor das Werkzeug öffnet, werden integrierte Stanzmesser betätigt, so daß aus dem Werkzeug ein komplett beschnittenes Formteil, nämlich die passende Dachversteifung entnommen werden kann.

Bei der Dachbeulsteifigkeitsprüfung wird durch die Druckkraft von außen die in den Innenraum zeigende Deckschicht auf Zugkraft belastet. Diese Seite des mehrschichtigen, auch als Sandwich bezeichneten Aufbaus der Dachversteifung wird mit dem einseitig beschichteten Kraftliner und dem reaktiven Klebstoff eingesetzt. Durch die Benetzung der Kraftliners mit dem reaktiven Klebstoff und der anschließenden Reaktion im Kraftliner erhält dieser eine wesentlich höhere Stabilität.

Durch das spannungsfreie Verkleben gibt es keine Rückverformung in der klimatischen Prüfung. Die Kraftliner sind durch die Beschichtung bzw. durch die Benetzung mit dem Klebstoff gegen Feuchtigkeitsaufnahme geschützt. Der Wärmeausdehnungskoeffizient liegt unter 10 * 10⁻⁶ 1/K, d.h. ähnlich dem Wärmeausdehnungskoeffizienten des Stahldaches. Die Steifigkeit ist in allen Richtungen gleichmäßig.

Durch den Einsatz von Polyurethanhartschaum als Distanzhalter für das mehrschichtige Element erhält man eine optimale Geräuschdämpfung und eine hohe thermische Isolation. Dieses beruht auf der Schwingungsfähigkeit der einzelnen Zelle und der Geschlossenzelligkeit.

## Patentansprüche

1. Verfahren zur Herstellung einer Dachversteifung für Fahrzeuge, die von innen an die Dachhaut des Fahrzeugs anbringbar ist, dadurch gekennzeichnet, daß ein planes mehrschichtiges Halbzeug aus zwei äußeren Kraftlinern und einer mittleren Hartschaumschicht hergestellt, dieses Halbzeug anschließend mittig gespalten und mit Übermaß auf die Abmessungen der Dachhaut zugeschnitten wird, daß ferner ein einzelner Kraftlinern mit Übermaß auf die Abmessungen der Dachhaut zugeschnitten wird und daß schließlich der Zuschnitt des gespaltenen Halbzeugs und der Zuschnitt des einzelnen Kraftliners zusammen mit einer Klebeschicht zwischen der Seite der Hartschaumschicht und dem einzelnen Kraftliner in einem der Wölbung und Kontur der Dachhaut entsprechenden Formwerkzeug auf die endgültige Form umgeformt und verklebt werden.

2. Verfahren nach Anspruch 1, dadurch gekennzeichnet, daß die zur Herstellung des mehrschichtigen Halbzeugs verwendeten Kraftliner beidseitig mit thermoplastischem Kunststoff beschichtet sind, während der einzelne Kraftliner nur einseitig auf der nicht zur Verklebung vorgesehenen Seite mit thermoplastischem Kunststoff beschichtet ist.

3. Verfahren nach Anspruch 1 oder 2, dadurch gekennzeichnet, daß der im Formwerkzeug zu einem Formteil umgeformte und zusammengefügte Zuschnitt des gespaltenen Halbzeugs und der Zuschnitt des einzelnen Kraftliners vor Verlassen des Formwerkzeugs auf die endgültige Form der Dachversteifung beschnitten wird.

4. Nach einem der Ansprüche 1 bis 3 hergestellte Dachversteifung, dadurch gekennzeichnet, daß die Kraftliner aus wasserfest verleimtem Zellstoffpapier mit einem Flächengewicht von 100 bis 200 g/m² bestehen.

5. Dachversteifung nach Anspruch 4, dadurch gekennzeichnet, daß die Hartschaumschicht aus geschlossenzelligem Polyurethanhartschaum mit einem Raumgewicht von 40 bis 55 kg/m³ besteht.

6. Dachversteifung nach Anspruch 4 oder 5, dadurch gekennzeichnet, daß die Kunststoffbeschichtung aus HDPE, PP oder PET besteht und ein Flächengewicht von 10 bis 25 g/m² besitzt.

7. Dachversteifung nach einem der Ansprüche 4 bis 6, dadurch gekennzeichnet, daß die Klebstoffschicht aus einem 1K- oder 2K-Polyurethansystem oder aus reinem Isozyanat besteht und ein Flächengewicht von 60 bis 120 g/m² besitzt.

## Claims

1. Method for the manufacture of a roof stiffener for vehicles, which can be attached from the inside to the vehicle roof membrane, characterized in that a planar, multilayer semifinished product is manufactured from two outer kraft liners and a central rigid foam layer, said semifinished product is subsequently centrally split and cut with oversize to the dimensions of the roof membrane, that further a single kraft liner is cut with oversize to the dimensions of the roof membrane and that finally the blank of the split semifinished product and the blank of the single kraft liner, together with an adhesive layer between the side of the rigid foam layer and the single kraft liner is moulded and bonded to the final shape in a mould corresponding to the convexity and contour of the roof membrane.

2. Method according to claim 1, characterized in that the kraft liners used for the manufacture of the multilayer semifinished product are coated on both sides with thermoplastic material, whereas the single kraft liner is only coated on one side with thermoplastic material, namely on the inside not intended for bonding.

3. Method according to claim 1 or 2, characterized in that the blank of the split semifinished product and the blank of the single kraft liner moulded and joined together in the mould to form a moulding, prior to leaving the mould is cut to the final shape of the roof stiffener.

4. Roof stiffener manufactured according to one of the claims 1 to 3, characterized in that the kraft liners comprise a waterproof, sized wood-free paper with a weight per unit area of 100 to 200 g/m².

5. Roof stiffener according to claim 4, characterized in that the rigid foam layer comprises closed cell polyurethane rigid foam with a bulk density of 40 to 55 kg/m³.

6. Roof stiffener according to claim 4 or 5, characterized in that the plastic coating comprises HDPE, PP or PET and has a weight per unit area of 10 to 25 g/m².

7. Roof stiffener according to one of the claims 4 to 6, characterized in that the adhesive layer comprises a 1K or 2K polyurethane system or pure isocyanate and has a weight per unit area of 60 to 120 g/m².

## Revendications

1. Procédé de fabrication d'un renfort de toit pour véhicule qui peut être appliqué, de l'intérieur, à la couverture du toit d'un véhicule, caractérisé en ce qu'un produit semi-fini plan multicouche est fabriqué en deux couches de kraft externes et une couche de mousse dure entre les deux, ce produit semi-fini est ensuite fendu au centre et est découpé avec démesure sur la dimension de la couverture de toit, en ce qu'est encore découpée un couche de kraft séparée avec démesure sur les dimensions de la couverture du toit et en ce qu'enfin la découpe du produit semi-fini et la découpe du couche de kraft séparée sont déformées et collées ensemble avec une couche de colle entre le côté de la couche de mousse dure et la couche de kraft séparée dans un outil de formage correspondant à la courbure et au profil de la couverture du toit sur la forme définitive.

2. Procédé suivant la revendication 1, caractérisé en ce que les couches de kraft utilisées pour fabriquer le produit semi-fini multicouche sont recouvertes, des deux côtés, d'une matière plastique thermoplastique, alors que la couche de kraft séparée n'est recouverte que d'un côté, sur le côté non pourvu de colle, de la matière plastique thermoplastique.

3. Procédé suivant la revendication 1 ou 2, caractérisé en ce que la coupe du produit semi-fini fendu déformé et assemblé dans l'outil de formage en portion de forme et la coupe du couche de kraft séparée sont coupées, avant de quitter l'outil de formage, sur la forme définitive du renfort du toit.

4. Renfort de toit fabriqué suivant l'une des revendications 1 à 3, caractérisé en ce que les couches de kraft sont en papier de cellulose avec colle hydraulique en masse par unité de surface allant de 100 à 200 g/m².

5. Renfort de toit suivant la revendication 4, caractérisé en ce que la couche de mousse dure se compose de mousse dure de polyuréthanne de poids spécifique allant de 40 à 55 kg/m³.

6. Renfort de toit suivant la revendication 4 ou 5, caractérisé en ce que le revêtement plastique se compose de HDPE, PP ou PET et a une masse par unité de surface allant de 10 à 25 g/m².

7. Renfort de toit suivant l'une des revendications 4 à 6, caractérisé en ce que la couche de colle plastique se compose d'un système de polyuréthanne-1K ou de polyuréthanne-2K ou de pur isocyanate et a une masse par unité de surface allant de 60 à 120 g/m².
